# EUROPEAN PATENT SPECIFICATION

(11) **EP 2 947 010 B1**
(45) Date of publication and mention of the grant of the patent: **27.12.2017**
(21) Application number: 15168105.3
(22) Date of filing: 19.05.2015
(51) Int. Cl.: B64D 11/00, A47B 91/08

(54) **AN IMPROVED ITEM OF AIRCRAFT FURNITURE**
VERBESSERTER FLUGZEUGMÖBELARTIKEL
ARTICLE DE MOBILIER D'AÉRONEF AMÉLIORÉ

(30) Priority: 19.05.2014 GB 201408861
(43) Date of publication of application: 25.11.2015
(73) Proprietor: Zodiac Seats UK Limited, Cwmbran NP44 3HQ (GB)
(72) Inventor: Reynolds, Paul, Cwmbran NP44 3HQ (GB)
(74) Representative: Abel & Imray

(56) References cited:
- WO-A1-2010/021593
- GB-A- 2 153 215
- US-A- 4 986 195
- US-A1- 2010 096 502
- US-B1- 7 013 831
- US-B2- 7 331 305

## Description

### Background of the Invention

The present invention concerns an item of aircraft furniture, in the form of an aircraft table. More particularly, but not exclusively, this invention concerns an item of aircraft furniture comprising an attachment mechanism for attaching the item to a floor of an aircraft and a locking mechanism for locking the attachment mechanism. The invention also concerns an aircraft comprising an item of aircraft furniture and a method of installing and a method of removing an item of aircraft furniture.

In general, items of aircraft furniture, such as aircraft seats, tend to be attached to the floor of an aircraft by a number of screws or similar fixings. These fixings generally extend through a part of the item and are fixed to a track/rail or a plinth connected to the aircraft floor. The fixings are generally installed and uninstalled using a tool, such as a screwdriver.

Hence, when it is desired to install or uninstall the item of furniture, it is necessary to use a specific tool and so such installing/uninstalling of furniture items generally only occurs during scheduled maintenance of the aircraft.

GB 2153215 discloses a furniture anchorage system where aircraft seat elements can be lowered into a series of detents in a rail in the aircraft floor. The seat elements can then be moved longitudinally to engage below an undercut formation in the rail.

US 2010/096502 discloses a tool-less track fastener for anchoring an aircraft seat to a track. The track fastener is attached to a leg of the seat and has a track stud with an enlarged foot for engaging a retaining slot of the track.

US 7331305 discloses apparatus for removably coupling a boat table to a boat deck. A base plat with a clamping slot is attached to the boat floor. The boat table is provided with a base assembly with a clamping bolt. The clamping bolt can be engaged in the clamping slot and a manually operable member on the base assembly can releasably clamp the bolt in the slot.

The present invention seeks to mitigate the above-mentioned problems. Alternatively or additionally, the present invention seeks to provide an improved item of aircraft furniture.

### Summary of the Invention

The present invention provides, according to a first aspect, an aircraft table according to claim 1. Said aircraft table is an item of aircraft furniture comprising an attachment mechanism for attaching the item to a floor of an aircraft, wherein the attachment mechanism comprises an attachment element moveable between a mated position, where the attachment element mates with a corresponding mating element connected to the floor of the aircraft, and an unmated position, where the attachment element does not mate with the corresponding mating element, and an integrated locking mechanism for locking the attachment mechanism, the locking mechanism comprising a locking element moveable between a locking position, where the locking element locks the attachment element in the mated position, and an unlocking position, where the locking element does not lock the attachment element in the mated position.

Here, "integrated" means that the locking mechanism is an integral part of the item of aircraft furniture. Preferably, the integral locking mechanism is a permanent part of the item of furniture. Preferably, the integral locking mechanism is not separated from the rest of the item of aircraft furniture during installation to or uninstallation from the aircraft floor. Clearly, this is not the case with a separate fixing, such as a screw.

Preferably, the item is attached to the floor of the aircraft when the attachment element is in the mated position, and the item is detached from the floor of the aircraft when the attachment element is in the unmated position.

Preferably, the locking element of the integral locking mechanism can be moved between the locking and unlocking positions without the use of a separate tool. Again, clearly, this is not the case with a separate fixing, such as a screw.

The locking element is caused to move between the unlocking and locking positions by a user moving a table top, forming a moveable element of the item of aircraft furniture.

Having an integrated locking mechanism allows the item of furniture to be locked in an attached configuration, without using a separate tool. This allows for the item to be installed and uninstalled without a separate tool. This means that these actions can be carried out more easily, for example during flight, rather than during maintenance.

Having an integrated locking mechanism allows the item of furniture to be locked in an attached configuration, without using a separate locking part or a separate tool. This allows for the item to be locked in its attached position without needing an additional locking part or tool (that may not be located with the item).

Preferably, the item of aircraft furniture is a free-standing item such that it is attachable to the floor of the aircraft independently of other items of furniture of the aircraft. For example, the attachment element may mate with a corresponding mating element that is part of the aircraft floor.

The item of aircraft furniture is an aircraft table, including a table top.

Preferably, in the mated position, the attachment element mates underneath the corresponding mating element connected to the floor of the aircraft. This prevents the item from being lifted up from the floor.

Preferably, the attachment element is caused to move between the mated position and the unmated position by movement of the item of aircraft furniture as a whole. For example, the attachment element can mate simply by moving the item into position. The attachment element may not be moveable with respect to the item as a whole. In other words, the attachment element may be fixed in relation to the item as a whole or a main element of the item. The table stem may be the main element of the item.

Preferably, the attachment element is moveable between the mated position and the unmated position by a sliding motion. This is an easy motion to achieve by a user and could be achieved by simply sliding the item.

More preferably, the attachment element is caused to slide between the mated position and the unmated position by rotation of the attachment element about an axis. For example, rotation of the item as a whole (or a main element of the item) may cause such rotation of the attachment element. The axis of rotation may be the axis of the item or the axis of the main element of the item. The table stem being the main element of the item, the attachment element may be offset from the axis of the stem such that rotation of the table stem causes rotation of the attachment element about the axis of the stem and causes the attachment element to slide in a circumferential direction around that axis.

The rotation action enables the item to be put in place where it is desired to locate it and then the item can be rotated to mate the attachment element. This makes locating and attaching the item easier.

Preferably, the attachment element is a lug, the lug having a mating surface which abuts against a corresponding mating surface of the corresponding mating element connected to the floor of the aircraft, wherein the two mating surfaces converge together as the lug is moved in the mating direction.

Here, "mating direction" is intended to mean the direction the lug is moved in to move it from the unmated to the mated position.

Having the mating surfaces converge together means that as the lug is moved into the mated position, the distance between the mating surfaces of the lug and the mating surface of the corresponding mating element decreases so that the mating surfaces are closer.

For example, the lug mating surface may be at an angle to the mating direction, such that the effective height of the lug towards the mating surface of the corresponding mating element increases. For example, the lug could angled upwards (with a constant thickness). Alternatively, the lug may be tapered so that the thickness dimension of the lug at the point of contact with the corresponding mating element increases as it is moved in the mating direction.

This means that if, during repeated use, the lug, or the corresponding mating element, wore down, the lug is still able to mate with the corresponding mating element. It would just require the lug to be moved further in the mating direction to do so.

Preferably, the attachment mechanism comprises a plurality of such attachment elements corresponding to a plurality of corresponding mating elements connected to the floor of the aircraft, and each moveable between respective unmated and mated positions, the plurality of attachment elements being connected to a common attachment member such that movement of the common attachment member causes movement of each of the plurality of attachment elements between the respective unmated and mated positions. This allows a plurality of mating connections to be achieved (making the attachment more stable) with a single mating motion. There may be four such attachment elements.

Preferably, the locking element is a locking pin and wherein, in the locking position, the locking pin extends, transversely to the mating direction, through a corresponding hole in the attachment mechanism. This allows the locking pin to restrict movement of the attachment element in the mating direction. The locking pin may also extend at least partially through a corresponding hole in the aircraft floor (or an element connected to the aircraft floor). This prevents movement of the attachment element with respect to the aircraft floor.

Here, "mating direction" is intended to mean the direction the lug (or attachment element) is moved in to move it from the unmated to the mated position.

The locking pin may extend through the common attachment member.

Preferably, the locking mechanism comprises a plurality of such locking elements, and each moveable between respective unlocking and locking positions, the plurality of locking elements being connected to a common locking member such that movement of the common locking member causes movement of each of the plurality of locking elements between the respective unlocking and locking positions. This allows a plurality of locking connections to be achieved (making the locking more stable) with a single locking motion. There may be four such locking elements.

The locking element is caused to move from the unlocking position to the locking position by the action of moving a table top of the aircraft table from a first position to a second position and wherein, in the second position, the item of aircraft furniture is useable.

The item may be useable in the second position by providing a substantially horizontal surface, as a table top or for seating, for example.

The table top is the moveable element of the item. The table top may be pivotally mounted to a table stem. The second, useable position may be a substantially horizontal position of the table top.

The first position of the moveable element is a stowed position. The table top is the moveable element of the item. The first position is a vertical position of the table top. This vertical position of the table top takes up less room (i.e. the table is mainly flat) and the table is more easily stowed or stored.

Preferably, the moveable element is rotatable between the first and second positions.

Preferably, the item of aircraft furniture further comprises a securing mechanism for securing the moveable element in the second position, the securing mechanism comprising a securing element moveable between a securing position, where the securing element secures the moveable element in the second position, and an unsecuring position, where the securing element does not secure the moveable element in the second position. This allows the moveable element to be secured in the second position. This allows the locking element(s) to be secured in the locking position(s) and the attachment element(s) to be secured in the mated position(s). Hence, the securing mechanism secures the item attached to the floor.

More preferably, the securing element is biased towards the securing position. This means that the moveable element may be secured automatically when it is in the second position.

Preferably, the securing element is moveable to the unsecuring position by a force provided on a user-operated actuator. This means that the moveable element may be unsecured from the second position by a user action. The actuator may be a handle or finger grip, for example.

Preferably, there are two such securing elements for securing the moveable element in the second position.

Preferably, the securing mechanism comprises an indicator which provides an indication of the position of the securing element. This allows a user to see what position the securing element is in. The indicator may be connected to the securing element or the user-operated actuator.

More preferably, the indicator comprises a tab moveable between a first indicating position and a second indicating position and wherein the tab is caused to move between the indicating positions by movement of the securing element between the unsecuring and securing positions.

Preferably, the indicator is a highly visible colour, such as red.

Preferably, the tab is visible in a first indicating position, corresponding to the securing element being in the unsecuring position. For example, the tab may stick out, for example from a table top, when in the first indicating position. The tab being in the first indicating position indicates to a user that the item is not secured by the securing element.

According to a second aspect of the invention there is also provided an aircraft comprising an aircraft table as described above, the item being attachable to the floor of the aircraft by the attachment mechanism.

According to a third aspect of the invention there is also provided a method of installing an aircraft table, according to claim 10. Said aircraft table is an item of aircraft furniture comprising an attachment mechanism, and a locking mechanism, the method comprising the following steps attaching the item to a floor of the aircraft by mating an attachment element of the attachment mechanism with a correspond mating element connected to the floor of the aircraft, and (then) moving a locking element of the locking mechanism to a locking position where it locks the mated attachment element in place with respect to the corresponding mating element.

The method comprises the step of moving a moveable element of the item of aircraft furniture from a first position to a second position, where the item of aircraft furniture is useable, and wherein such movement of the moveable element causes the movement of the locking element.

The item is useable in the second position by providing a substantially horizontal surface, as a table top.

According to a fourth aspect of the invention there is also provided a method of removing an aircraft table, according to claim 11. Said aircraft table is an item of aircraft furniture comprising an attachment mechanism, and a locking mechanism, the method comprising the following steps moving a locking element of the locking mechanism to an unlocking position where it unlocks an attachment element of the attachment mechanism that is mated with a corresponding mating element connected to a floor of the aircraft, and then detaching the item from the floor of the aircraft by de-mating the attachment element from the corresponding mating element connected to the floor of the aircraft.

The method comprises the step of moving a moveable element of the item of aircraft furniture from a second position, where the item of aircraft furniture is useable, to a first position, and wherein such movement of the moveable element causes the movement of the locking element.

The item is useable in the second position by providing a substantially horizontal surface, as a table top.

It will of course be appreciated that features described in relation to one aspect of the present invention may be incorporated into other aspects of the present invention. For example, the method of the invention may incorporate any of the features described with reference to the apparatus of the invention and *vice versa.*

### Description of the Drawings

Embodiments of the present invention will now be described by way of example only with reference to the accompanying schematic drawings of which:
- Figure 1: shows a perspective under view of a table according to a first embodiment of the invention, in an attached, locked and secured configuration;
- Figure 2a: shows a perspective top view of part of an aircraft floor for attaching the table of Figure 1, in a covered configuration;
- Figure 2b: shows an enlarged view of part of the aircraft floor of Figure 2a, in an uncovered configuration;
- Figure 3a: shows an upside-down perspective view of the base of the table of Figure 1, in an unlocked configuration;
- Figure 3b: shows a perspective under view of the table of Figure 1, with the table stem casing removed, in a locked and secured configuration;
- Figure 3c: shows an upside-down perspective view of the base of the table of Figure 1, in a locked configuration;
- Figure 3d: shows a partial perspective view of the table of Figure 1, with the table top in an upright configuration;
- Figure 3e: shows an enlarged view of part of Figure 3d;
- Figure 3f: shows a more plan view of Figure 3e;
- Figure 4a: shows an underside of the table top of the table of Figure 1, in the unsecured configuration; and
- Figure 4b: shows an underside of the table top of the table of Figure 1, in the secured configuration.

### Detailed Description

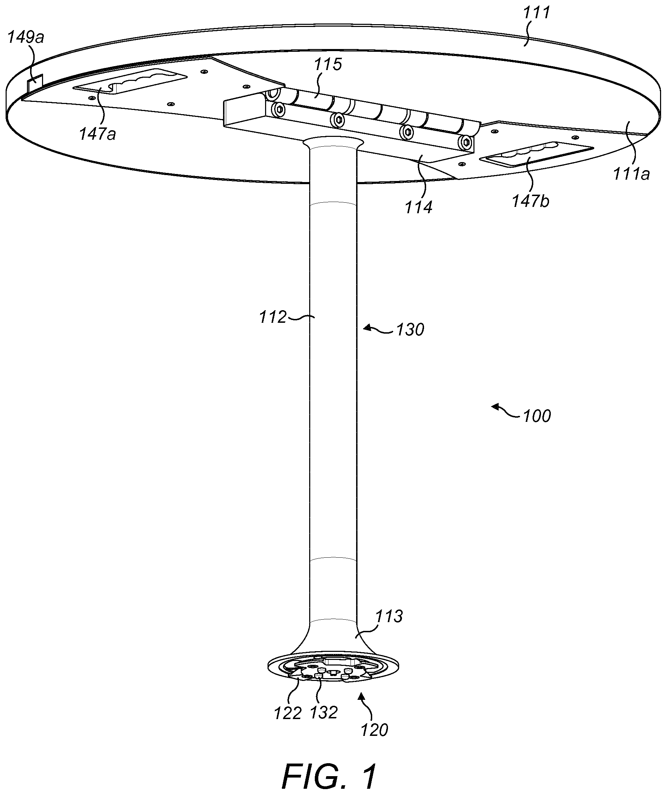

Figure 1 shows a perspective under view of a table 100 for an aircraft interior, according to a first embodiment of the invention, in a locked and secured configuration. The table 100 has a circular table top 111 with an underside 111a and a topside (not shown). The table top 111 is supported by a single central table stem 112, in the form of a circular pole casing. At the bottom of the stem 112 is a table base 113 comprising an outwardly curved portion to provide a wider base to the table stem. Protruding from the bottom of the base 113 of the stem 112 is an attachment mechanism 120, which will be described later.

Attached to the top of the table stem 112 is a rectangular table block 114, with a width approximately the same as the stem diameter and a length extending outwards either side of the stem. A lower part 115a of a two-part table hinge 115 is attached along one long side of the table block 114 and the upper part 115b is attached to the underside 111a of the table top 111. Towards each outside edge of the table top 111, in line with each end of the table block 114, is a handle 147a, 147b, which will be described later.

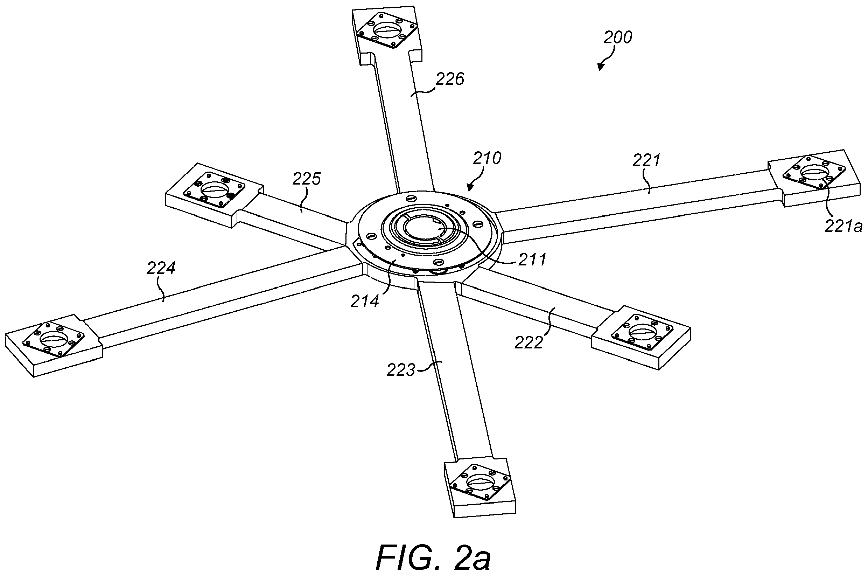

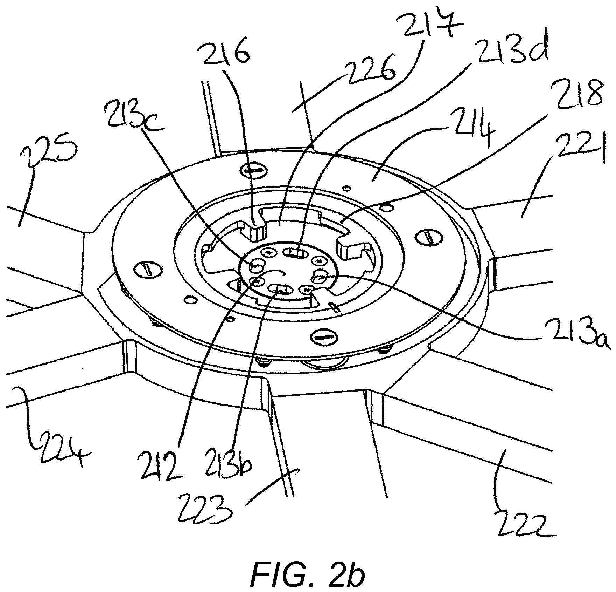

Figures 2a and 2b show perspective top views of part of an aircraft floor 200 for attaching the table 100. Figure 2a shows the aircraft floor 200 with an aircraft floor carpet removed, for clarity. Here, a furniture mating mechanism 210 can be seen in the centre. It is surrounded by six supporting beams 221, 222, 223, 224, 225, 226 which are attached to the aircraft floor 200 and support the weight of the furniture attached to the mating mechanism 210. Each support beam is a rectangular beam attached around the circumference of the mating mechanism 210. At the far end of each beam is an attachment point (labelled ass 221a on beam 221) to attach each support beam to the aircraft floor 200.

The mating mechanism 210 comprises an upper attachment ring 214 that is screwed down to sit flush with the top of the carpet of the aircraft floor 200. Inside the ring 214 is a circular cover 211, which also sits flush with the carpet.

In Figure 2b, the cover 211 is removed to show the internal parts of the mating mechanism 210. The mechanism 210 comprises a lower, inner locking disc 212 which sits below the attachment ring 214. The locking disc 212 comprising four elongate rounded holes 213a, 213b, 213c, 213d extending around a circumference of the locking disc 212. These holes 213a, 213b, 213c, 213d are for receiving four locking pins of the table 100, which will be described later.

The inner edge of the upper attachment ring 214 comprises a shaped profile with four location spokes 216 protruding towards the centre of the ring 214. Each spoke 216 has a corresponding gap 217 in the clockwise direction (looking from above) around the ring 214. Further in the clockwise direction, is a corresponding overlap lip 218. Each locating spoke 216, gap 217 and lip 217 combination occupies a 1/4 circumference of the ring 214. The spokes 216 and lips 218 sit above the locking disc 212 with a space underneath them in between them and the locking disc 212. The four spokes 216 are for locating four attachment lugs of the table, which will be described later, the four gaps 217 are for receiving the four attachment lugs of the table. The space underneath, in between the lips 218 and the locking disc allow the attachment lugs to be slid to be mated underneath the lips 218.

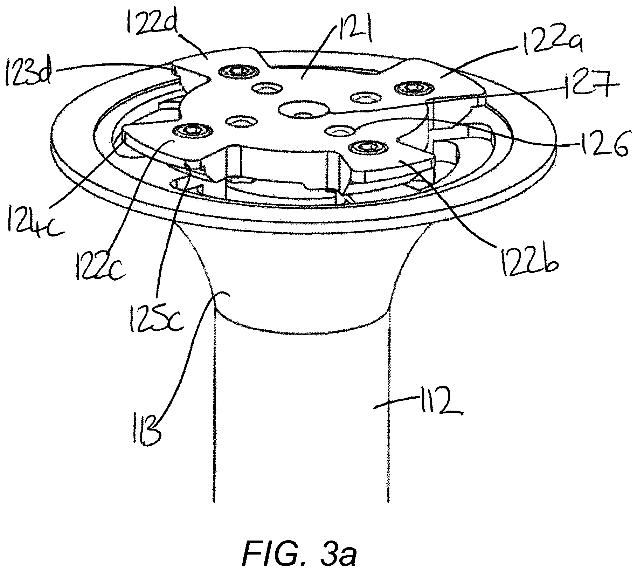

Figure 3a shows an upside-down perspective view of the base of the table 100, in an unlocked configuration. Here, the attachment mechanism 120 can be seen. The attachment mechanism 120 comprises a profiled attachment disc 121 that protrudes below the base 113 of the table stem 112. The disc has a central hole 127 and four outer holes 126 spaced equally around the central hole 127. At the outer edge of the attachment disc 121 are four equally spaced attachment lugs 122a, 122b, 122c, 122d. These lugs 122 are shaped so that they have a thin outer edge 123 (123d labelled) with a gap between the edge and the bottom of the base 113. These gaps receive the lips 218 of the mating mechanism 210 of the aircraft floor 200.

Each thin outer edge 123 is shaped so that the thin edge 123 has a thicker portion 124 (124c shown) at a clockwise end (as shown in Figure 3a, looking from the bottom of the table 100) and a thinner portion 125 (125c shown) at an opposite end. When the table 100 is the right way up, the thicker portions 124 are located at the anti-clockwise end and the thinner portions 125 are located at the clockwise end. Hence, when the table 100 is the right way up and is rotated clockwise direction about the stem 112 (looking from above), then the thinner portions 125 of each lug 122 are "ahead" of the thicker portions 124.

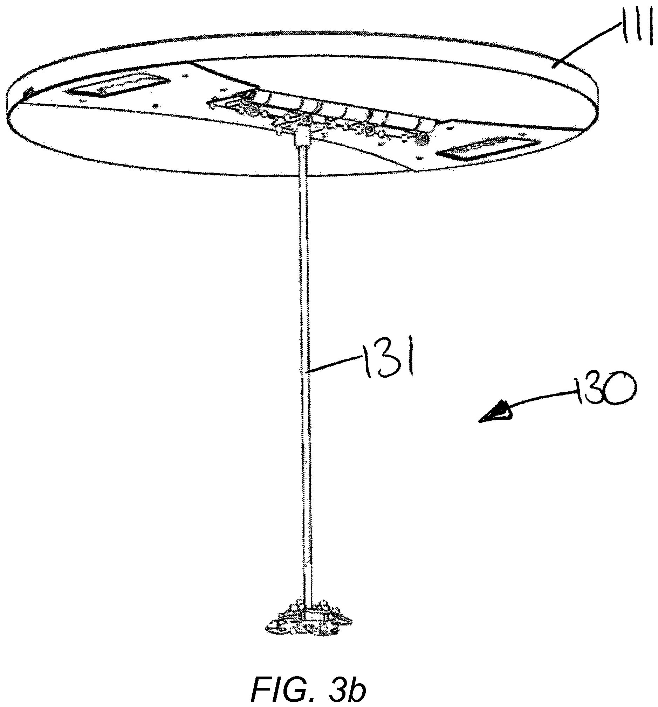

Figure 3b shows a perspective under view of the table 100, with the table stem 112 casing removed, in a locked and secured configuration. Here a locking rod 131, as part of a locking mechanism 130 of the table 100, extends from the table top 111 to the table base 113 can be seen. This locking rod 131 is attached to four locking pins, as will be described later.

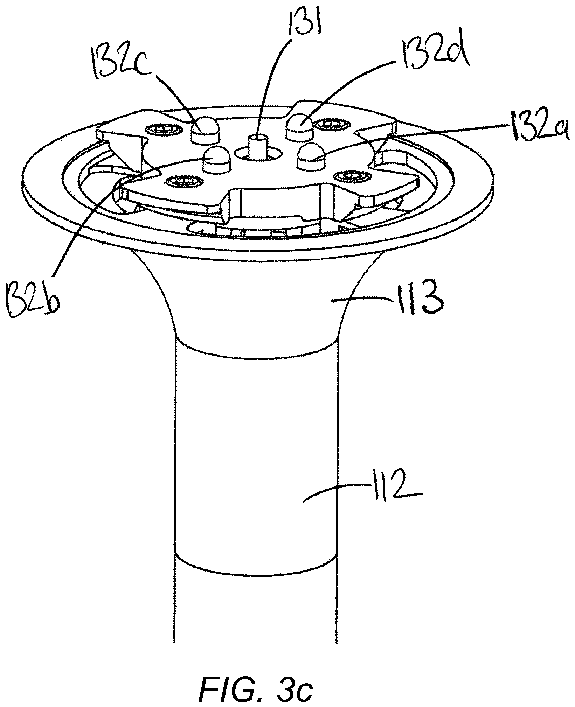

Figure 3c shows an upside-down perspective view of the base 113 of the table 100, in a locked configuration. Here, the four locking pins 132a, 132b, 132c, 132d of the locking mechanism 130 can be seen. These locking pins 132 are protruding through the four outer holes 126 of the attachment disc 121. The bottom end of the locking rod 131 extends through the central hole 127 of the attachment disc 121. The locking pins 132 are connected to the locking rod 131 such that when the locking rod 131 is pushed downwards through the stem 112 of the table 100, and extends through central hole 127, the locking pins 132 are also pushed downwards to extend through the four outer holes 126 (the locking position).

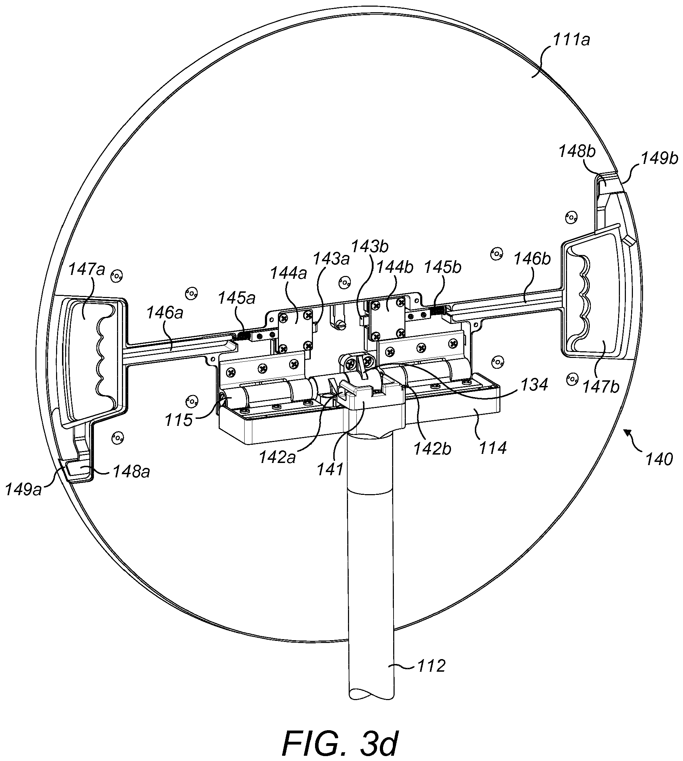

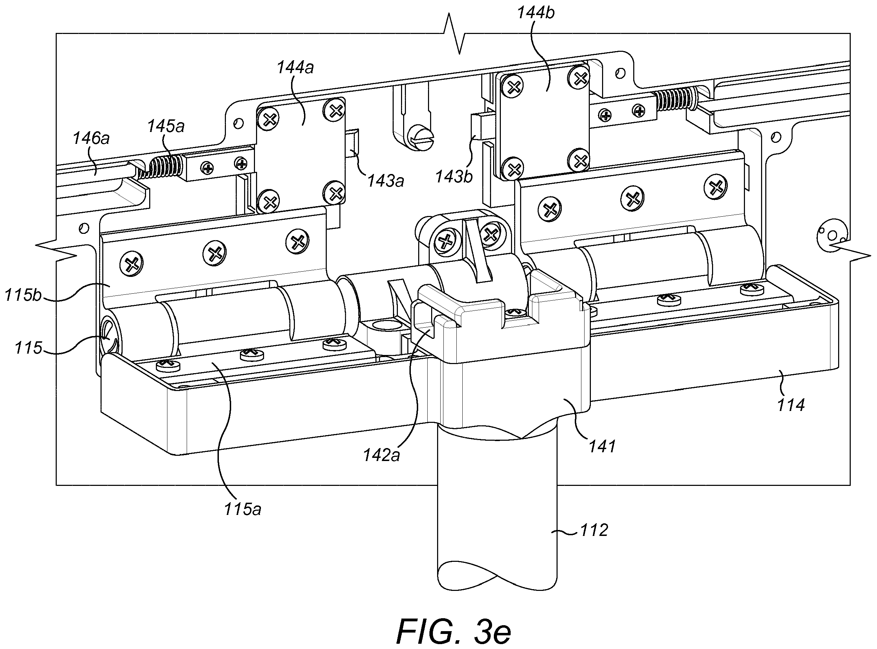

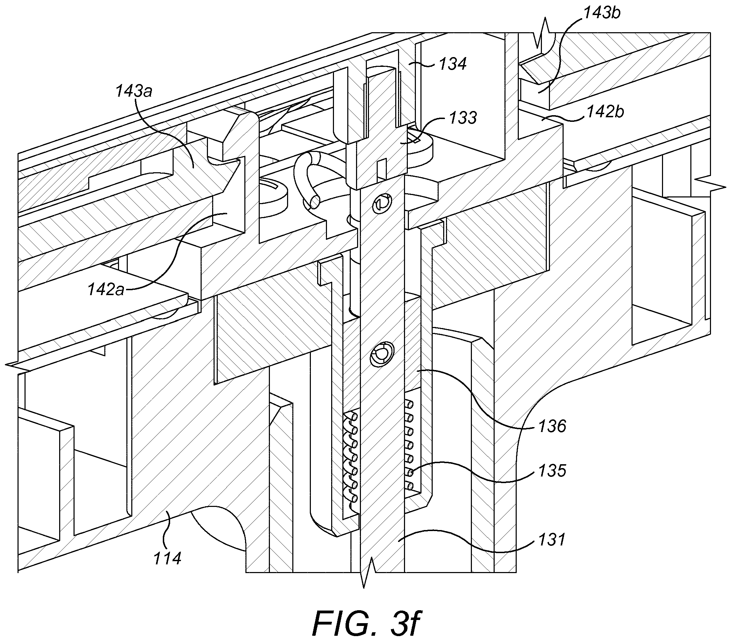

Figures 3d, 3e and 3f show partial perspective views of the table 100, with the table top in an upright configuration. In Figure 3d, the table top 111 can clearly be seen as having been pivoted from its horizontal position in Figure 1, to a vertical position. This is achieved by the table hinge 115 being attached to the underside 111a of the table top 111 and the top of the table block 114.

There is a locking actuator 134 attached to the underside 111a of the table top 111. The locking actuator 134 is pivoted downwards when the table top 111 is moved to the horizontal position and pushes on the top 133 of the locking rod 131, as shown in Figure 3f. This pushing downwards on the locking rod 131 causes the locking pins 132 to extend through the four outer holes 126 in the attachment disc 121 (locking position). When the table top 111 is moved back to the vertical position, the locking actuator 134 pivots upwards and allows the locking rod 131 (and locking pins) to lift (unlocking position). The locking rod 131 is biased to lift up by a locking spring 135, located around the locking rod in a cavity in the table stem 112, and a locking bias block 136, attached on the locking rod above the locking spring 135.

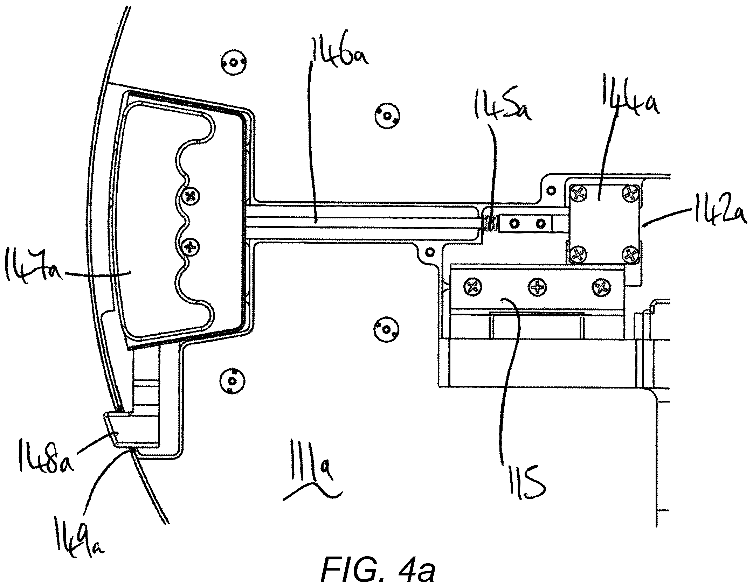

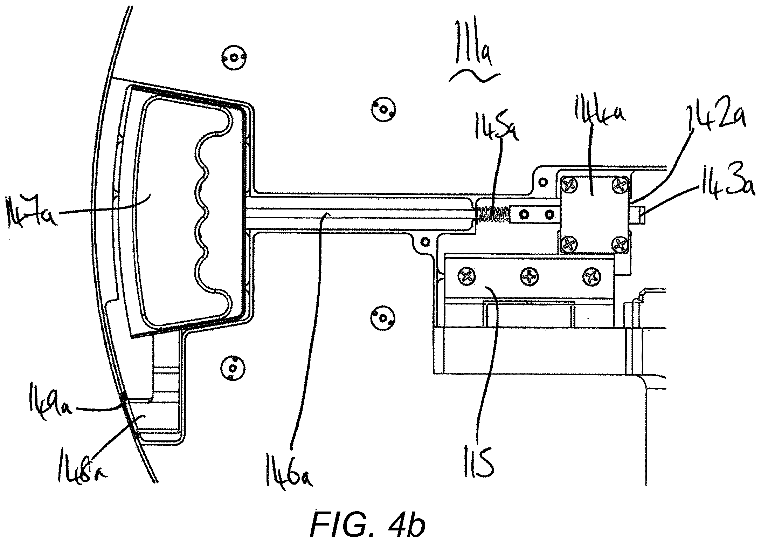

Also at the top of the table block 114 is a securing block 141, as part of a securing mechanism 140 of the table 100. The securing block 141 has two rectangular securing slots 142a, 142b; one on each side of the block 141. These securing slots 142a, 142b correspond to securing strikers 143a, 143b of the securing mechanism 140. The strikers 143 protrude through striker blocks 144a, 144b on each side of the underside 111a of the table top 111, as described in more detail, in relation to Figures 4a and 4b.

Figures 4a and 4b show the underside 111a of the table top 111 of the table 100, in the unsecured and secured configurations, respectively. The figures show one side (the "a" side) of the table, but this information equally applies to both sides. Here, it can be seen that the striker 143a, when in the secured configuration of Figure 4b, is biased to extend out of the striker block 144a and through the securing slot 142a of the striker block 141. This secures the table top 111 in the horizontal position. When in the unsecured configuration of Figure 4a, the striker 143a is abutting against a part of the striker block 141 and is therefore pushed back into the striker block 144a. Hence, as the striker 143a does not extend through the securing slot 142a of the striker block 141, the table top 111 is not secured in the horizontal position.

The striker 143a is connected to a striker rod 146a extending from the striker 143a, through the striker block 144a to a handle 147a at an outer edge of the underside 111a of the table top 111. On the striker rod 146a is a spring 145a, which biases the rod 146a inwards and the striker 143a into the protruding (securing) position of Figure 4b. Here, the spring 145a is in its natural extended state. In Figure 4a, when the striker 143a is pushed back by the securing block 141, the spring 145a is compressed.

The handle 147a has a finger hold portion for a user to grip. The handle 147a is biased by the spring 145a into the inward (securing) position of Figure 4b. However, when a user pulls on the handle 147a to move it to the outward (unsecuring) position of Figure 4a, it acts against the spring 145a to move the striker 143a back, out of the securing block 141 and into the striker block 144a.

Attached to the handle 147a is an indicator tab 148a. When the handle 147a is in the securing (inward) position, the indicator tab is contained within the area of the table top 111. However, when the handle 147a is in the unsecuring (outward) position, the indicator table 148a extends out of a hole 149a in the side of the table top 111 and can be seen protruding out from the table top 111. Hence, the indicator tab 148a shows a user when the striker 143a is not extending through the securing block securing slot 142a and hence, when the table top 111 is not secured in the horizontal position.

In use, to install the table 100, the cover 211 is removed from the mating mechanism 210 on the floor 200 of the aircraft and the table top 111 is put in the vertical position.

The attachment mechanism 210 is then inserted into the mating mechanism 210 so that the four attachment lugs 122 drop in to the gaps 217 adjacent the locating spokes 216 of the mating mechanism 210. The table 100 is the rotated approximately a 1/4 turn clockwise (looking from above) so that the attachment lugs 122 slide underneath the corresponding overlap lips 218. The lugs are rotated in this "mating direction" such that the thinner part 125 of each lug slides under the corresponding lip 218 first. The table 100 is rotated until the lips 218 and the lugs 122 are mated (i.e. when the thin edges of the lugs 123 abut against the undersides of the lips 218). This is the mating position.

To lock the table 100 in place in the mating position, the table top 111 is pivoted about hinge 115 to the horizontal position. As it reaches the horizontal position, the strikers 143a, 143b are pushed outwards (against the springs 145a, 145b) by the securing block 141 at the top of the table stem 112. They then spring back into the securing slots 142a, 142b when the table top 111 is in the fully horizontal position. This also pulls the handles 147a, 147b inwards and also the indicator tabs 148a, 148b inwards (so they are covered by the table top 111).

Also, as the table top 111 is moved to the horizontal position, the top 133 of the locking rod 131 is pushed downwards by the locking actuator 134. This causes the locking rod 131 and the locking pins 132 to be pushed downwards. Hence, the locking rod 131 extends through the central hole 127 in the attachment disc and the four locking pins 132 extend through the four outer holes 126 in the attachment disc 121. The locking pins 132 are then pushed further downwards and into the four elongate rounded holes 213 in the locking disc 212. This is the locking position and prevents the table 100 as a whole (and the attachment lugs 122) from rotating with respect to the lips 218 (and the aircraft floor 200). The elongate holes 213 in the locking disc are elongate to allow the locking pins 132 to extend into them in a variety of positions (corresponding to the amount of rotation of the table 100 to reach the mating position, dependent on the amount of wear on the attachment lugs 122 and lips 218).

To remove the table 100 from the aircraft floor 200, a user pulls on handles 147a, 147b to move them outwards against the springs 145a, 145b. This pulls the strikers 143a, 143b out of the securing slots 142a, 142b in the securing block 141. This is the unsecuring position. (This also pulls the indicator tabs 148a, 148b outwards, so they protrude from the table top 111.) The user can then pivot the table top 111 about hinge 115 towards its vertical position. Once the strikers 143a, 143b have been cleared passed the securing slots 142a, 142b, the handles 147a, 147b can be released.

As the table top 111 is moved away from the horizontal position, the locking actuator 134 lifts from the top 133 of the locking rod 133 and so the biased locking rod 133 and the locking pins 132 lift up. Hence, the locking pins 132 no longer protrude through the rounded holes 213 in the locking disc 212 or the four outer holes 126 in the attachment disc 121, and the locking rod 131 does not protrude through the central hole 127. This is the unlocking position.

The table 100 can now be rotated anti-clockwise (looking from above) as the attachment lugs 122 are now free to be rotated (in the "unmating" direction) from underneath the lips 218. Hence, the lugs 122 then are rotated by approximately a 1/4 turn to abut the locating spokes 216 and to line up with the adjacent gaps 217 (the unmated position). The table 100 can then be lifted from the aircraft floor 200.

The table 100 can then be stowed somewhere, or installed in a different position on the aircraft floor 200, for example. The cover 211 may be replaced into the mating mechanism 210 on the floor 200 of the aircraft.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

In the above example, the table is attached to an attachment mechanism 210 of the aircraft floor 200. The table may also be attached to another element or item of furniture that is itself attached to the aircraft floor 200.

In the above example, the locking pins are biased to be in their unlocking position and have to be pushed into the locking position by a user moving the table top to the horizontal position.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. An aircraft table (100), comprising:
- an attachment mechanism (120) for attaching the aircraft table to a floor of an aircraft, wherein the attachment mechanism comprises an attachment element (122) moveable between a mated position, where the attachment element is able to mate with a corresponding mating element connected to the floor of the aircraft, and an unmated position, where the attachment element is unable to mate with the corresponding mating element, and
- an integrated locking mechanism (130) for locking the attachment mechanism, the locking mechanism comprising a locking element (132) moveable between a locking position, where the locking element is able to lock the attachment element in the mated position, and an unlocking position, where the locking element is not able to lock the attachment element in the mated position,
**characterised in that** the locking element is caused to move from the unlocking position to the locking position by the action of moving a table top (111) of the aircraft table from a stowed, vertical position to a second position and wherein, in the second position, the aircraft table is useable.

2. An aircraft table as claimed in claim 1, wherein the aircraft table (100) is a free-standing item of furniture such that it is attachable to the floor of the aircraft independently of other items of furniture of the aircraft.

3. An aircraft table (100) as claimed in any preceding claim, wherein the attachment element (122) is moveable between the mated position and the unmated position by a sliding motion.

4. An aircraft table (100) as claimed in claim 3, wherein the attachment element (122) is caused to slide between the mated position and the unmated position by rotation of the attachment element about an axis.

5. An aircraft table (100) as claimed in any preceding claim, wherein the attachment element (122) is a lug, the lug having a mating surface which abuts against a corresponding mating surface of the corresponding mating element connected to the floor of the aircraft, wherein the two mating surfaces converge together as the lug is moved in the mating direction.

6. An aircraft table (100) as claimed in any preceding claim, wherein the locking element (132) is a locking pin and wherein, in the locking position, the locking pin extends, transversely to the mating direction, through a corresponding hole (126) in the attachment mechanism.

7. An aircraft table (100) as claimed in any preceding claim, wherein the table top (111) is rotatable between the stowed and second positions.

8. An aircraft table (100) as claimed in any preceding claim, wherein the aircraft table further comprises a securing mechanism (140) for securing the table top in the second position, the securing mechanism comprising a securing element (143) moveable between a securing position, where the securing element secures the table top in the second position, and an unsecuring position, where the securing element does not secure the table top in the second position.

9. An aircraft comprising an aircraft table (100) as claimed in any preceding claim, the aircraft table being attachable to the floor of the aircraft by the attachment mechanism.

10. A method of installing an aircraft table (100), the aircraft table comprising:
- an attachment mechanism (120), and
- a locking mechanism (130),
the method comprising the following steps:
- attaching the aircraft table (100) to a floor of the aircraft by mating an attachment element (122) of the attachment mechanism with a corresponding mating element connected to the floor of the aircraft, and
- moving a locking element (132) of the locking mechanism to a locking position where it locks the mated attachment element in place with respect to the corresponding mating element, **characterised in that** the method comprises the step of moving a table top (111) of the aircraft table from a stowed, vertical position to a second position, where the aircraft table is useable, and wherein such movement of the table top causes the movement of the locking element.

11. A method of removing an aircraft table (100), the aircraft table comprising:
- an attachment mechanism (120), and
- a locking mechanism (130),
the method comprising the following steps:
- moving a locking element (132) of the locking mechanism to an unlocking position where it unlocks an attachment element (122) of the attachment mechanism that is mated with a corresponding mating element connected to a floor of the aircraft, and then
- detaching the aircraft table (100) from the floor of the aircraft by de-mating the attachment element from the corresponding mating element connected to the floor of the aircraft,
**characterised in that** the method comprises the step of moving a table top (111) of the aircraft table from a second position, where the aircraft table is useable, to a stowed, vertical position, and wherein such movement of the table top causes the movement of the locking element.

## Patentansprüche

1. Flugzeugtisch (100), aufweisend:
- einen Befestigungsmechanismus (120) zum Befestigen des Flugzeugtisches an einem Boden eines Flugzeugs, wobei der Befestigungsmechanismus ein Befestigungselement (122) aufweist, das zwischen einer Verbindungsposition, in der das Befestigungselement mit einem entsprechenden, mit dem Boden des Flugzeugs verbundenen Verbindungselement in Verbindung treten kann, und einer Nicht-Verbindungsposition, in der das Befestigungselement nicht mit dem entsprechenden Verbindungselement in Verbindung treten kann, bewegbar ist, und
- einen integrierten Verriegelungsmechanismus (130) zum Verriegeln des Befestigungsmechanismus, wobei der Verriegelungsmechanismus ein Verriegelungselement (132) aufweist, das zwischen einer Verriegelungsposition, in der das Verriegelungselement das Befestigungselement in der Verbindungsposition verriegeln kann, und einer Entriegelungsposition, in der das Verriegelungselement das Befestigungselement nicht in der Verbindungsposition verriegeln kann, bewegbar ist,
**dadurch gekennzeichnet, dass** das Verriegelungselement veranlasst wird, sich von der Entriegelungsposition in die Verriegelungsposition zu bewegen, indem eine Tischplatte (111) des Flugzeugtisches von einer verstauten, vertikalen Position in eine zweite Position bewegt wird, und wobei der Flugzeugtisch in der zweiten Position nutzbar ist.

2. Flugzeugtisch nach Anspruch 1,
wobei es sich bei dem Flugzeugtisch (100) um ein freistehendes Möbelstück handelt, so dass dieses unabhängig von anderen Möbelstücken des Flugzeugs am Boden des Flugzeugs anbringbar ist.

3. Flugzeugtisch (100) nach einem der vorhergehenden Ansprüche,
wobei das Befestigungselement (122) durch eine Gleitbewegung zwischen der Verbindungsposition und der Nicht-Verbindungsposition bewegbar ist.

4. Flugzeugtisch (100) nach Anspruch 3,
wobei das Befestigungselement (122) durch Rotation des Befestigungselements um eine Achse dazu veranlasst wird, eine Gleitbewegung zwischen der Verbindungsposition und der Nicht-Verbindungsposition auszuführen.

5. Flugzeugtisch (100) nach einem der vorhergehenden Ansprüche,
wobei das Befestigungselement (122) ein Fortsatz ist, wobei der Fortsatz eine Verbindungsfläche aufweist, die an einer entsprechenden Verbindungsfläche des mit dem Boden des Flugzeugs verbundenen Verbindungselements in Anlage gelangt, wobei die beiden Verbindungsflächen miteinander konvergieren, wenn der Fortsatz in Verbindungsrichtung bewegt wird.

6. Flugzeugtisch (100) nach einem der vorhergehenden Ansprüche,
wobei das Verriegelungselement (132) ein Verriegelungsstift ist und wobei sich der Verriegelungsstift in der Verriegelungsposition quer zu der Verbindungsrichtung durch eine entsprechende Öffnung (126) in dem Befestigungsmechanismus erstreckt.

7. Flugzeugtisch (100) nach einem der vorhergehenden Ansprüche,
wobei die Tischplatte (111) zwischen der verstauten und der zweiten Position rotationsbeweglich ist.

8. Flugzeugtisch (100) nach einem der vorhergehenden Ansprüche,
wobei der Flugzeugtisch ferner einen Sicherungsmechanismus (140) zum Sichern der Tischplatte in der zweiten Position aufweist, wobei der Sicherungsmechanismus ein Sicherungselement (143) aufweist, das zwischen einer Sicherungsposition, in der das Sicherungselement die Tischplatte in der zweiten Position sichert, und einer Nicht-Sicherungsposition, in der das Sicherungselement die Tischplatte nicht in der zweiten Position sichert, bewegbar ist.

9. Flugzeug mit einem Flugzeugtisch (100) nach einem der vorhergehenden Ansprüche,
wobei der Flugzeugtisch durch den Befestigungsmechanismus an dem Boden des Flugzeugs anbringbar ist.

10. Verfahren zum Installieren eines Flugzeugtisches (100),
wobei der Flugzeugtisch Folgendes aufweist:
- einen Befestigungsmechanismus (120), und
- einen Verriegelungsmechanismus (130),
wobei das Verfahren die folgenden Schritte aufweist:
- Befestigen des Flugzeugtisches (100) an einem Boden des Flugzeugs durch Verbinden eines Befestigungselements (122) des Befestigungsmechanismus mit einem entsprechenden Verbindungselement, das mit dem Boden des Flugzeugs verbunden ist, und
- Bewegen eines Verriegelungselements (132) des Verriegelungsmechanismus in eine Verriegelungsposition, in der es das verbundene Befestigungselement in Bezug auf das entsprechende Verbindungselement in seiner Position verriegelt,
**dadurch gekennzeichnet, dass** das Verfahren den Schritt beinhaltet, in dem eine Tischplatte (111) des Flugzeugtisches von einer verstauten, vertikalen Position in eine zweite Position bewegt wird, in der der Flugzeugtisch nutzbar ist, und wobei eine derartige Bewegung der Tischplatte die Bewegung des Verriegelungselements veranlasst.

11. Verfahren zum Entfernen eines Flugzeugtisches (100),
wobei der Flugzeugtisch Folgendes aufweist:
- einen Befestigungsmechanismus (120), und
- einen Verriegelungsmechanismus (130),
wobei das Verfahren die folgenden Schritte aufweist:
- Bewegen eines Verriegelungselements (132) des Verriegelungsmechanismus in eine Entriegelungsposition, in der es ein Befestigungselement (122) des Befestigungsmechanismus entriegelt, das mit einem entsprechenden, mit einem Boden des Flugzeugs verbundenen Verbindungselement in Verbindung steht, und anschließend
- Lösen des Flugzeugtisches (100) vom Boden des Flugzeugs, indem das Befestigungselement aus der Verbindung mit dem entsprechenden Verbindungselement gelöst wird, das mit dem Boden des Flugzeugs verbunden ist,
**dadurch gekennzeichnet, dass** das Verfahren den Schritt beinhaltet, in dem eine Tischplatte (111) des Flugzeugtisches von einer zweiten Position, in der der Flugzeugtisch nutzbar ist, in eine verstaute, vertikale Position bewegt wird, und wobei eine derartige Bewegung der Tischplatte die Bewegung des Verriegelungselements veranlasst.

## Revendications

1. Table d'aéronef (100) comprenant :
- un mécanisme de fixation (120) pour fixer la table d'aéronef sur un plancher d'un aéronef, le mécanisme de fixation comprenant un élément de fixation (122) mobile entre une position couplée, dans laquelle l'élément de fixation peut se coupler avec un élément de couplage correspondant raccordé au plancher de l'aéronef, et une position découplée, dans laquelle l'élément de fixation ne peut pas se coupler avec l'élément de couplage correspondant, et
- un mécanisme de verrouillage intégré (130) pour verrouiller le mécanisme de fixation, le mécanisme de verrouillage comprenant un élément de verrouillage (132) mobile entre une position de verrouillage, dans laquelle l'élément de verrouillage peut verrouiller l'élément de fixation dans la position couplée, et une position de déverrouillage, dans laquelle l'élément de verrouillage ne peut pas verrouiller l'élément de fixation dans la position couplée,
**caractérisée en ce que** l'élément de verrouillage est amené à passer de la position de déverrouillage à la position de verrouillage par l'action du déplacement d'un plateau de table (111) de la table d'aéronef d'une position verticale rangée à une seconde position et dans laquelle, dans la seconde position, la table d'aéronef est utilisable.

2. Table d'aéronef selon la revendication 1, la table d'aéronef (100) étant un article de mobilier autonome de sorte qu'elle peut être fixée sur le plancher de l'aéronef indépendamment des autres articles de mobilier de l'aéronef.

3. Table d'aéronef (100) selon l'une quelconque des revendications précédentes, dans laquelle l'élément de fixation (122) est mobile entre la position couplée et la position découplée par un mouvement de coulissement.

4. Table d'aéronef (100) selon la revendication 3, dans laquelle l'élément de fixation (122) est amené à coulisser entre la position couplée et la position découplée par la rotation de l'élément de fixation autour d'un axe.

5. Table d'aéronef (100) selon l'une quelconque des revendications précédentes, dans laquelle l'élément de fixation (122) est une patte, la patte ayant une surface de couplage qui vient en butée contre une surface de couplage correspondante de l'élément de couplage correspondant raccordé au plancher de l'aéronef, dans laquelle les deux surfaces de couplage convergent ensemble lorsque la patte est déplacée dans la direction de couplage.

6. Table d'aéronef (100) selon l'une quelconque des revendications précédentes, dans laquelle l'élément de verrouillage (132) est une goupille de verrouillage et dans laquelle, dans la position de verrouillage, la goupille de verrouillage s'étend, transversalement à la direction de couplage, à travers un trou (126) correspondant dans le mécanisme de fixation.

7. Table d'aéronef (100) selon l'une quelconque des revendications précédentes, dans laquelle le plateau de table (111) peut tourner entre la position rangée et la seconde position.

8. Table d'aéronef (100) selon l'une quelconque des revendications précédentes, la table d'aéronef comprenant en outre un mécanisme de fixation (140) pour fixer le plateau de table dans la seconde position, le mécanisme de fixation comprenant un élément de fixation (143) mobile entre une position de fixation, dans laquelle l'élément de fixation fixe le plateau de table dans la seconde position, et une position de détachement dans laquelle l'élément de fixation ne fixe pas le plateau de table dans la seconde position.

9. Aéronef comprenant une table d'aéronef (100) selon l'une quelconque des revendications précédentes, la table d'aéronef pouvant être fixée sur le plancher de l'aéronef par le mécanisme de fixation.

10. Procédé pour installer une table d'aéronef (100), la table d'aéronef comprenant :
- un mécanisme de fixation (120), et
- un mécanisme de verrouillage (130),
le procédé comprenant les étapes suivantes :
- fixer la table d'aéronef (100) sur un plancher de l'aéronef en couplant un élément de fixation (122) du mécanisme de fixation avec un élément de couplage correspondant raccordé au plancher de l'aéronef, et
- déplacer l'élément de verrouillage (132) du mécanisme de verrouillage dans une position de verrouillage, dans laquelle il verrouille l'élément de fixation couplé en place par rapport à l'élément de couplage correspondant,
le procédé étant **caractérisé en ce qu'**il comprend l'étape pour faire passer un plateau de table (111) de la table d'aéronef d'une position verticale rangée à une seconde position, dans laquelle la table d'aéronef est utilisable, et dans lequel un tel mouvement du plateau de table provoque le mouvement de l'élément de verrouillage.

11. Procédé pour retirer une table d'aéronef (100), la table d'aéronef comprenant :
- un mécanisme de fixation (120), et
- un mécanisme de verrouillage (130),
le procédé comprenant les étapes suivantes :
- faire passer l'élément de verrouillage (132) du mécanisme de verrouillage dans une position de déverrouillage dans laquelle il déverrouille un élément de fixation (122) du mécanisme de fixation qui est couplé avec un élément de couplage correspondant raccordé à un plancher de l'aéronef, et ensuite
- détacher la table d'aéronef (100) du plancher de l'aéronef en découplant l'élément de fixation de l'élément de couplage correspondant raccordé au plancher de l'aéronef,
le procédé étant **caractérisé en ce qu'**il comprend l'étape pour faire passer un plateau de table (111) de la table de l'aéronef d'une seconde position dans laquelle la table d'aéronef est utilisable, à une position verticale rangée, et dans lequel un tel mouvement du plateau de table provoque le mouvement de l'élément de verrouillage.
